# DEMANDE DE BREVET EUROPEEN

(11) **EP 4 814 484 A1**
(43) Date de publication de la demande: **30.09.2026**
(21) Numéro de dépôt: 26166996.4
(22) Date de dépôt: 24.03.2026
(51) Int. Cl.: G01N 29/06, G01N 29/24, G01N 29/44, G01N 29/46

(54) **PROCÉDÉ D'AUTOCALIBRATION DE DONNÉES D'IMAGERIE MULTIMODALE PAR ONDES ÉLASTIQUES GUIDÉES**

(30) Priorité: 24.03.2025 FR 2503018
(71) Demandeur: Commissariat à l'Energie Atomique et aux Energies Alternatives, 75015 Paris (FR)
(72) Inventeur: THOMAS, Axel, 91191 GIF SUR YVETTE CEDEX (FR); DRUET, Tom, 91191 GIF SUR YVETTE CEDEX (FR); RECOQUILLAY, Arnaud, 91191 GIF SUR YVETTE CEDEX (FR)
(74) Mandataire: Regimbeau

(57) **Abrégé**

L'invention porte sur un procédé de calibration pour l"imagerie d'une structure par ondes élastiques guidées, comprenant :
- pour chaque couple de capteurs d'une pluralité de couples de capteurs comportant chacun un capteur émetteur et un capteur récepteur et pour chaque fréquence d'intérêt d'une pluralité de fréquences d'intérêt :
∘ l'obtention d'une mesure à la fréquence d'intérêt (*φ*|*^{exp}*(|***x**ᵢ - **x**ⱼ*|, *fₖ*)) d'un champ de propagation d'une onde dans la structure,
∘ la détermination d'un coefficient de calibration (*c*(|***x**ᵢ - **x**ⱼ*|, *fₖ*)) permettant de relier le champ de propagation mesuré à la fréquence d'intérêt à un champ de propagation théorique à la fréquence d'intérêt $\left({φ}^{th}\left(\left|{x}_{i}-{x}_{j}\right|, {f}_{k}\right)\right) .$

La détermination, pour chaque couple de capteurs et pour chaque fréquence d'intérêt, d'un coefficient de calibration comprend, pour chaque fréquence d'intérêt et pour chaque ensemble d'une pluralité d'ensembles de couples de capteurs regroupant chacun les couples de capteurs dont les capteurs sont équidistants, le calcul d'un coefficient de calibration propre à l'ensemble.

## Description

### DOMAINE TECHNIQUE

Le domaine de l'invention est celui du contrôle non destructif de structures au moyen de méthodes d'imagerie par ondes élastiques guidées. L'invention porte plus particulièrement sur une autocalibration de données d'imagerie ne nécessitant pas de recourir à un état de référence de la structure contrôlée. L'invention trouve par exemple une application à l'inspection de plaques, de tuyaux ou de conduites forcées, notamment dans les domaines du gaz, du nucléaire ou de l'hydraulique.

### TECHNIQUE ANTÉRIEURE

Dans le domaine du contrôle non destructif, les techniques de contrôle santé intégré (SHM pour « Structural Health Monitoring » en anglais) consistent à instrumenter une structure d'un réseau de capteurs permettant un suivi continu de son état et de l'apparition de défauts, dus par exemple à la corrosion. Le comportement des ondes élastiques guidées se propageant dans la structure, émises et détectées par des capteurs noyés dans le matériau ou collés à sa surface, permet de remonter aux différentes caractéristiques physiques du matériau et de détecter une perte locale d'épaisseur. Les données acquises par les différents capteurs peuvent ensuite être exploitées par des algorithmes d'imagerie, tels que des algorithmes de tomographie pour fournir une cartographie de l'épaisseur de la zone inspectée. Ce type d'information permet ensuite d'identifier les défauts, de quantifier leur nocivité (localisation, étendue, profondeur) et de lancer si nécessaire une opération de maintenance.

La tomographie par ondes élastiques guidées nécessite une calibration des données afin de coller au mieux au modèle d'imagerie. Cette calibration est généralement réalisée à l'aide d'un état de référence déterminé au début de la vie de la structure, lorsqu'il n'y a pas de défauts.

Le Demandeur a développé une méthode d'autocalibration qui ne nécessite pas d'état de référence. Cette méthode, dite méthode antérieure dans ce qui suit, présente l'avantage de permettre de réaliser des mesures robustes dans le temps contrairement à une méthode de calibration basée sur un état de référence pour laquelle les mesures réalisées peuvent devenir obsolètes si les conditions environnementales (par exemple la température ou la réponse d'un capteur) évoluent au cours du temps.

Cette méthode antérieure est notamment décrite dans la demande de brevet EP 4 217 727 A1 ou encore dans Tom Druet, Jean-Loup Tastet, Bastien Chapuis, Emmanuel Moulin, Autocalibration method for guided wave tomography with undersampled data, Wave Motion, Volume 89, 2019, Pages 265-283, ISSN 0165-2125, https://doi.org/10.1016/j.wavemoti.2019.04.002.

Cette méthode antérieure a été développée pour répondre aux spécificités des algorithmes de tomographie qui font une hypothèse de propagation acoustique. L'hypothèse "acoustique", qui repose sur la propagation d'un mode unique, simplifie la physique du modèle de propagation dans un solide où les ondes ont en réalité un comportement élastique. Il s'avère ainsi possible de passer de la résolution d'un système vectoriel à celle d'une unique équation scalaire. Les calculs sont, alors, beaucoup moins coûteux mais les cas d'usage et la résolution sont inévitablement impactés.

Il existe d'autres algorithmes d'imagerie basés sur un modèle élastodynamique, notamment la « dérivée de forme » ou la méthode d'échantillonnage linéaire (LSM pour « Linear Sampling Method » en anglais), qui permettent de traiter des cas plus complexes. Des méthodes de résolution numérique telles que la méthode des éléments finis permettent d'obtenir la solution du problème élastodynamique, à savoir la réponse théorique du milieu à une excitation donnée après propagation des ondes élastiques guidées. Des signaux simulés peuvent ainsi être utilisés dans l'imagerie.

Une nouvelle méthode d'autocalibration doit cependant être développée pour s'adapter à l'imagerie élastodynamique par ondes guidées. Les grandes différences avec la tomographie acoustique résident dans le fait que les signaux à calibrer contiennent potentiellement plusieurs modes guidés et sont multi-fréquentiels. En effet, les ondes élastiques guidées ont la particularité d'être multimodales (plusieurs modes pour une fréquence considérée) et dispersives (la vitesse de propagation dépend de la fréquence). Chaque mode possède donc une vitesse de propagation différente et l'amplitude de chaque mode dépend des caractéristiques des capteurs qui sont utilisés.

### EXPOSÉ DE L'INVENTION

L'invention vise à répondre à ce besoin pour une solution d'autocalibration adaptée à l'imagerie multimodale par ondes guidées et propose pour ce faire un procédé de calibration pour l'imagerie d'une structure par ondes élastiques guidées, comprenant :
- pour chaque couple de capteurs d'une pluralité de couples de capteurs comportant chacun un capteur émetteur et un capteur récepteur et pour chaque fréquence d'intérêt d'une pluralité de fréquences d'intérêt :
   ∘ l'obtention d'une mesure à la fréquence d'intérêt d'un champ de propagation d'une onde dans la structure du capteur émetteur vers le capteur récepteur,
   ∘ la détermination d'un coefficient de calibration permettant de relier le champ de propagation mesuré à la fréquence d'intérêt à un champ de propagation théorique à la fréquence d'intérêt (*φ^{th}*(|***x**ᵢ - **x**ⱼ*|, *fₖ*)) associé au couple de capteurs.

Ladite détermination, pour chaque couple de capteurs et pour chaque fréquence d'intérêt, d'un coefficient de calibration comprend, pour chaque fréquence d'intérêt et pour chaque ensemble d'une pluralité d'ensembles de couples de capteurs regroupant chacun les couples de capteurs dont les capteurs sont équidistants, le calcul d'un coefficient de calibration propre à l'ensemble.

Certains aspects préférés mais non limitatifs de ce procédé sont les suivants :
- la détermination, pour une fréquence d'intérêt et pour un ensemble de couples de capteurs, d'un coefficient de calibration propre à l'ensemble comprend, pour chaque couple de capteurs de l'ensemble, la détermination d'un facteur de calibration à partir du champ de propagation mesuré à la fréquence d'intérêt qui est associée audit couple et du champ de propagation théorique à la fréquence d'intérêt qui est associé audit couple ;
- le calcul, pour une fréquence d'intérêt et pour un ensemble de couples de capteurs, du coefficient de calibration propre à l'ensemble comprend l'identification, parmi les facteurs de calibration déterminés pour chaque couple de capteurs de l'ensemble, de facteurs de calibration aberrants et de facteurs de calibration non aberrants et la détermination d'une valeur à partir des facteurs de calibration non aberrants ;
- pour une fréquence d'intérêt et pour un ensemble de couples de capteurs, le coefficient de calibration associé à chaque couple de capteurs de l'ensemble correspond au coefficient de calibration propre à l'ensemble ;
- pour une fréquence d'intérêt et pour un ensemble de couples de capteurs, le coefficient de calibration associé à un couple de capteurs est le facteur de calibration associé lorsque ce facteur de calibration est non aberrant et correspond au coefficient de calibration propre à l'ensemble lorsque le facteur de calibration associé est aberrant ;
- l'identification, parmi les facteurs de calibration déterminés pour chaque couple de capteurs de l'ensemble, de facteurs de calibration aberrants et de facteurs de calibration non aberrants comprend, pour chaque facteur de calibration, le calcul d'une distance de Mahalanobis entre le facteur de calibration et une distribution formée par les facteurs de calibration déterminés pour chaque couple de capteurs de l'ensemble ;
- la valeur déterminée à partir des facteurs de calibration non aberrants est une moyenne des facteurs de calibration non aberrants ;
- il comprend en outre pour chaque couple de capteurs et pour chaque fréquence d'intérêt, la calibration à l'aide du coefficient de calibration calculé d'un champ de propagation parmi le champ de propagation mesuré à la fréquence d'intérêt associé audit couple et le champ de propagation théorique à la fréquence d'intérêt associé audit couple.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma d'un dispositif d'imagerie apte à mettre en œuvre le procédé selon l'invention ;
- la figure 2 représente les facteurs de calibration calculés pour cinq ensembles de couples de capteurs et trois fréquences d'intérêt, ainsi que le contour de confiance associé ;
- la figure 3 et la figure 4 sont des images de tomographie acoustique calculées respectivement à partir d'une autocalibration avec la méthode antérieure et avec le procédé selon l'invention, pour une faible erreur affectant un propagateur ;
- la figure 5 et la figure 6 sont des images de tomographie acoustique calculées respectivement à partir d'une autocalibration avec la méthode antérieure et avec le procédé selon l'invention, pour une erreur plus important affectant le propagateur ;
- la figure 7 et la figure 8 montrent, dans le cadre d'une reconstruction avec dérivée de forme, des signaux de référence sains et des signaux calibrés avec respectivement la méthode antérieure et le procédé selon l'invention ;
- la figure 9 montre, dans le cadre de la reconstruction avec dérivée de forme, l'erreur relative entre les signaux calibrés par la méthode antérieure et des signaux de référence sains ainsi que l'erreur relative entre les signaux calibrés par le procédé selon l'invention et les signaux de référence sains ;
- la figure 10 et la figure 11 montrent des matrices d'erreur pour l'ensemble des couples émetteurs/récepteurs pour respectivement la méthode antérieure et le procédé selon l'invention dans le cadre de la reconstruction avec dérivée de forme.

### EXPOSÉ DÉTAILLÉ DE MODES DE RÉALISATION PARTICULIERS

Pour inspecter une structure en imagerie par ondes élastiques guidées, il faut :
- coupler plusieurs capteurs autour de la zone à imager ;
- faire l'acquisition des signaux en transmission pour chaque couple de capteurs (émission d'une onde avec un capteur, propagation de cette onde dans la structure, mesure par tous les capteurs puis répétition de cette opération pour tous les capteurs) ;
- les signaux mesurés sont les données d'entrée de l'algorithme d'imagerie. Ils sont utilisés pour produire une image de la zone inspectée.

Afin de compenser les données par rapport au modèle ou le modèle par rapport aux données, une étape de calibration des signaux est nécessaire dans le domaine fréquentiel.

Dans le domaine fréquentiel, théoriquement, les signaux mesurés par les capteurs peuvent être vus comme une superposition des modes élastiques guidés de la structure inspectée (une plaque, un tube, etc.) : $φ \left({x}_{i}, {x}_{j}, ω\right) = {\sum }_{n = 0}^{∞} {E}_{n} \left({x}_{i}, ω\right) {P}_{n} \left({x}_{i}, {x}_{j}, ω\right) {R}_{n} \left({x}_{j}, ω\right)$

Où:
*φ*(***x**ᵢ*, ***x**ⱼ, ω*) est le champ à la fréquence *ω* mesuré en ***x**ⱼ* de la structure inspectée, pour une émission de l'onde située en ***x**ᵢ. i* est ainsi l'indice de l'émission et *j* l'indice de la réception ;
*Eₙ*(***x**ᵢ, ω*) est un facteur d'émission complexe du mode *n* permettant de modéliser le capteur en tant qu'émetteur ;
*Pₙ*(***x**ᵢ, **x**ⱼ, ω*) est un propagateur pour le mode *n* permettant de modéliser la propagation des modes élastiques guidés dans la structure ;
*Rₙ*(***x**ⱼ, ω*) est un facteur de réception du mode *n* permettant de modéliser le capteur en tant que récepteur.

Une démonstration est exposée dans ce qui suit afin de mettre en avant la différence entre la calibration monomodale et mono-fréquentielle effectuée dans la méthode antérieure pour la tomographie acoustique et la calibration multi-modale et multi-fréquentielle proposée par la présente invention, nécessaire à l'imagerie élastodynamique en général et également applicable à la tomographie acoustique.

### Autocalibration mono-modale et mono-fréquentielle (méthode antérieure)

La tomographie par diffraction basée sur une approche acoustique présente les particularités suivantes :
- C'est une méthode monomodale, considérons ainsi ici que *n* = 0 ;
- L'imagerie est réalisée à une seule fréquence d'intérêt *f_{c}* (souvent la fréquence centrale du signal d'émission).

L'expression du champ d'onde théorique se simplifie et devient : ${φ}^{th} \left({x}_{i}, {x}_{j}, {f}_{c}\right) = {E}_{0} \left({x}_{i}, {f}_{c}\right) {P}_{0} \left({x}_{i}, {x}_{j}, {f}_{c}\right) {R}_{0} \left({x}_{j}, {f}_{c}\right) .$

Lorsque ces champs d'onde sont mesurés expérimentalement ou même calculés par simulation pour obtenir les données d'entrée de l'algorithme de tomographie, il existe un écart ${δφ}_{ij} ∈ ℂ$ entre la théorie et les données. Cet écart peut être par exemple dû à :
- Une erreur entre le modèle de propagation et la réalité, liée à une hypothèse (hypothèse de propagation acoustique alors que l'on travaille avec des données élastodynamiques par exemple) ;
- Une erreur sur le modèle du capteur (ou du couplant du capteur) ;
- Les propriétés de la structure qui ne sont pas précisément celles qui sont considérées dans le modèle ;
- Le bruit de la chaine de mesure.

Il est donc possible d'exprimer le champ d'onde expérimental de la manière suivante : ${φ}^{exp} \left({x}_{i}, {x}_{j}, {f}_{c}\right) = {E}_{0} \left({x}_{i}, {f}_{c}\right) {P}_{0} \left({x}_{i}, {x}_{j}, {f}_{c}\right) {R}_{0} \left({x}_{j}, {f}_{c}\right) + {δφ}_{ij}$

Afin de pouvoir réaliser une imagerie par tomographie de qualité, il est nécessaire de calibrer soit les champs d'onde expérimentaux soit les champs d'onde théoriques afin de compenser les données par rapport au modèle ou le modèle par rapport aux données. Pour ce faire, une étape de calibration est réalisée.

Prenons par exemple le cas d'une calibration des données par rapport au modèle : pour chaque couple de capteur (*i, j*)*,* un coefficient de calibration *cᵢⱼ* est calculé en divisant le champ théorique par le champ expérimental : ${c}_{ij} = \frac{{φ}^{th} \left({x}_{i}, {x}_{j}, {f}_{c}\right)}{{φ}^{exp} \left({x}_{i}, {x}_{j}, {f}_{c}\right)} = \frac{{E}_{0} \left({x}_{i}, {f}_{c}\right) {P}_{0} \left({x}_{i}, {x}_{j}, {f}_{c}\right) {R}_{0} \left({x}_{j}, {f}_{c}\right)}{{E}_{0} \left({x}_{i}, {f}_{c}\right) {P}_{0} \left({x}_{i}, {x}_{j}, {f}_{c}\right) {R}_{0} \left({x}_{j}, {f}_{c}\right) + {δφ}_{ij}}$

Notons que s'il avait été choisi de calibrer le modèle par rapport aux données, les valeurs $1 + \frac{{δφ}_{ij}}{{E}_{0} \left({x}_{i}, {f}_{c}\right) {P}_{0} \left({x}_{i}, {x}_{j}, {f}_{c}\right) {R}_{0} \left({x}_{j}, {f}_{c}\right)}$ auraient été trouvées pour les facteurs de calibration notés dans ce cas de figure *dᵢⱼ* avec ${d}_{ij} = \frac{{φ}^{exp} \left({x}_{i}, {x}_{j}, {f}_{c}\right)}{{φ}^{th} \left({x}_{i}, {x}_{j}, {f}_{c}\right)}$*.*

Ainsi, si l'on est capable d'estimer correctement les coefficients de calibration *cᵢⱼ* pour l'ensemble des couples de capteurs (*i, j*)*,* il est possible de calibrer les données expérimentales en multipliant les facteurs de calibration aux champs d'onde expérimentaux couple par couple : ${φ}_{cal}^{exp} \left({x}_{i}, {x}_{j}, {f}_{c}\right) = {c}_{ij} {φ}^{exp} \left({x}_{i}, {x}_{j}, {f}_{c}\right) \approx {φ}^{th} \left({x}_{i}, {x}_{j}, {f}_{c}\right) .$

Ou bien dans le cas d'une calibration du modèle par rapport aux données, on multiplierait les facteurs de calibration aux champs d'onde théorique : ${φ}_{cal}^{th} \left({x}_{i}, {x}_{j}, {f}_{c}\right) = {d}_{ij} {φ}^{th} \left({x}_{i}, {x}_{j}, {f}_{c}\right) \approx {φ}^{exp} \left({x}_{i}, {x}_{j}, {f}_{c}\right)$ .

Pour estimer les coefficients de calibration, il faut être capable d'estimer le champ théorique *φ^{th}*(***x**ᵢ*, ***x**ⱼ*, *f_{c}*). Dans la méthode antérieure, cela est réalisé en estimant que le champ théorique est égal à la fonction de Green libre acoustique de la structure *G*₀(***x**ᵢ, **x**ⱼ*, *f_{c}*). Cela revient à considérer des capteurs ponctuels dans le modèle acoustique. Par exemple, le champ théorique est exprimable analytiquement pour la tomographie acoustique dans le cas d'une plaque homogène isotrope et pour une source ponctuelle. Ainsi, dans ce cas, la fonction de Green libre vaut : ${G}_{0} \left({x}_{i}, {x}_{j}, {f}_{c}\right) = \frac{i}{4} {H}_{0}^{\left(1\right)} \left({k}_{0}\left({f}_{c}\right)\left|{x}_{j}-{x}_{i}\right|\right) ,$ où ${H}_{0}^{\left(1\right)}$ est la première fonction Hankel, *k*₀ est le nombre d'onde et où dans $\frac{i}{4}$, *i* désigne le nombre complexe.

La première étape de la méthode antérieure consiste à calculer un ensemble de coefficients de calibration en calculant $\frac{{G}_{0} \left({x}_{i}, {x}_{j}, {f}_{c}\right)}{{φ}^{exp} \left({x}_{i}, {x}_{j}, {f}_{c}\right)}$. Cela permet d'obtenir un nuage de points dans un plan complexe où chaque point correspond à un potentiel coefficient de calibration. Pour que la calibration puisse être de bonne qualité, il faut que le champ *φ^{exp}* soit semblable autant que possible à un champ qui aurait été mesuré sans présence de défaut le long du trajet entre l'émetteur et le récepteur. Or la méthode étant réalisée sans état de référence, *φ^{exp}* est justement mesuré en présence d'un potentiel défaut. La méthode antérieure propose ainsi de retirer les coefficients ayant été impactés par un défaut en deux étapes :
1) La première étape est optionnelle et consiste à utiliser une image de tomographie en temps de vol pour identifier la position d'un ou plusieurs défauts et retirer les trajets passant par le ou les défauts ;
2) La deuxième étape consiste à calculer une ellipse de confiance sur le nuage de points et de retirer tous les coefficients sortant de cette ellipse de confiance. Les coefficients les plus éloignés du centre de l'ellipse sont en effet statistiquement les plus susceptibles d'avoir été impactés par un défaut.

La dernière étape consiste en l'estimation finale des coefficients de calibration *cᵢⱼ*. Un coefficient de calibration moyen $\overline{c} ∈ ℂ$ est calculé à partir des coefficients de calibration ${\left\{{{c}^{˜}}_{l}\right\}}_{l} ∈ {ℂ}^{M}$ sélectionnés par l'ellipse de confiance, ainsi $\overline{c} = \frac{1}{M} {\sum }_{l = 1}^{M} {{c}^{˜}}_{l}$

Où M est le nombre de coefficients sélectionnés comme étant considérés sains par l'ellipse de confiance. L'ensemble des *cᵢⱼ* sont alors estimés comme étant égaux à *c̅*. Alternativement, une option propose de garder les valeurs des *cᵢⱼ* dans l'ellipse de confiances car considérés sains et de donner la valeur de *c̅* aux autres.

L'estimation des *cᵢⱼ* étant faite, la calibration peut alors être réalisée selon l'équation (3).

### Autocalibration multi-modale et multi-fréquentielle

Dans le cas d'une imagerie multi-modale, comme l'imagerie élastodynamique, les signaux complets doivent être considérés. Plusieurs modes élastiques guidés coexistent ainsi dans le signal mesuré. Rappelons l'équation (1) qui représente le champ d'ondes dans le domaine fréquentiel : $φ \left({x}_{i}, {x}_{j}, ω\right) = {\sum }_{n = 0}^{∞} {E}_{n} \left({x}_{i}, ω\right) {P}_{n} \left({x}_{i}, {x}_{j}, ω\right) {R}_{n} \left({x}_{j}, ω\right)$ Où :
*φ*(***x**ᵢ*,***x**ⱼ, ω*) est le champ à la fréquence *ω* mesuré en ***x**ⱼ* de la structure inspectée et pour une émission de l'onde située en ***x**ᵢ. i* est ainsi l'indice de l'émission et *j* l'indice de la réception ;
*Eₙ*(***x**ᵢ, ω*) est un facteur d'émission complexe du mode *n* permettant de modéliser le transducteur en tant qu'émetteur ;
*Pₙ*(***x**ᵢ, **x**ⱼ, ω*) est un propagateur pour le mode *n* permettant de modéliser la propagation des modes élastiques guidées dans la structure ;
*Rₙ*(***x**ⱼ*, *ω*) est un facteur de réception du mode *n* permettant de modéliser le transducteur en tant que récepteur.

On s'aperçoit que lorsqu'on effectue le rapport du champ théorique sur le champ expérimental, la sommation sur les différents modes ne permet pas la simplification des termes. Autrement dit, l'expression des coefficients de calibration ne permet pas d'avoir la même valeur pour tous les coefficients lorsque l'on considère tous les couples de capteurs car plusieurs distances entre capteurs interviennent. Le Demandeur a pu constater que la simplification n'est alors possible que si les termes sont égaux, à savoir si les distances |***x**ᵢ - **x**ⱼ*| sont les mêmes. Ceci a pour conséquence de ne pas supprimer la dépendance en ***x*** dans le facteur de calibration. En comparant avec les données expérimentales dans le domaine fréquentiel, chaque mode présente donc un écart d'amplitude et de phase qui varie en fonction de la distance de propagation. Ainsi, pour chaque mode *n*, chaque fréquence *ω* et chaque distance |***x**ᵢ - **x**ⱼ*|*,* un facteur de calibration spécifique *cₙ*(|***x**ᵢ - **x**ⱼ*|, *ω*) est nécessaire pour ajuster l'amplitude et la phase théorique à l'amplitude et la phase expérimentale observée : ${c}_{n} \left(\left|{x}_{i}-{x}_{j}\right|, ω\right) = \frac{{φ}^{n , exp} \left(\left|{x}_{i}-{x}_{j}\right|, ω\right)}{{φ}^{n , th} \left(\left|{x}_{i}-{x}_{j}\right|, ω\right)}$

En pratique, en raison des interférences potentielles entre les différents modes de Lamb dans une plaque, il n'est pas faisable d'appliquer un facteur de calibration distinct pour chaque mode. A la place, le Demandeur propose de considérer un unique facteur de calibration global à tous les modes *c*(|***x**ᵢ - **x**ⱼ*|, *ω*) afin d'ajuster le champ d'onde théorique en fonction de la distance de propagation |***x**ᵢ - **x**ⱼ*| et de la fréquence *ω*. Le champ d'onde calibré à une distance |***x**ᵢ - **x**ⱼ*| et à une fréquence *ω* est alors obtenu en multipliant le champ d'onde théorique global par le facteur de calibration pour cette distance et cette fréquence : $\begin{matrix}{φ}_{cal}^{th} \left(\left|{x}_{i}-{x}_{j}\right|, ω\right) = c \left(\left|{x}_{i}-{x}_{j}\right|, ω\right) {φ}^{th} \left(\left|{x}_{i}-{x}_{j}\right|, ω\right) \\ = c \left(\left|{x}_{i}-{x}_{j}\right|, ω\right) {\sum }_{n = 0}^{∞} {E}_{n} \left({x}_{i}, ω\right) {P}_{n} \left(\left|{x}_{i}-{x}_{j}\right|, ω\right) {R}_{n} \left({x}_{j}, ω\right)\end{matrix}$

Dans ce contexte, la présente invention propose un procédé d'autocalibration multi-modale et multi-fréquentielle pour l'imagerie d'une structure par ondes élastiques guidées. L'imagerie a typiquement pour objectif la détection, la quantification et le suivi d'endommagement dans la structure imagée, par exemple le suivi de la corrosion ou l'érosion dans une tuyauterie.

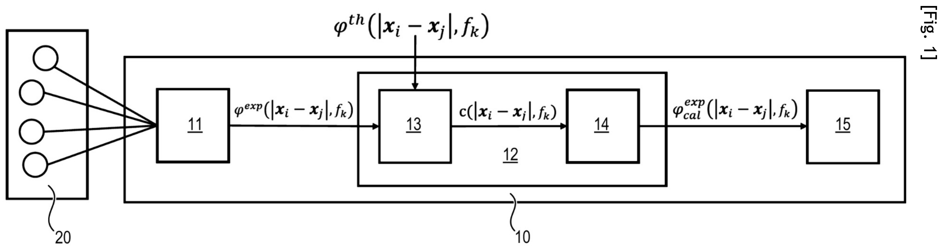

Ce procédé peut être mis en œuvre par un processeur d'un dispositif d'imagerie 10 dont un schéma est représenté sur la figure 1. Ce dispositif 10 est relié à une unité d'acquisition 20 de signaux délivrés par un ensemble de capteurs couplés à la surface de la structure inspectée ou intégrés à celle-ci. Comme indiqué précédemment, chaque capteur de l'ensemble fait successivement office de capteur émetteur, les autres formant des capteurs récepteurs. L'ensemble de capteurs se décompose ainsi en une pluralité de couples de capteurs comportant chacun un capteur émetteur *i* et un capteur récepteur *j.*

Le dispositif d'imagerie 10 comprend une unité 11 de prétraitement des signaux délivrés par l'unité d'acquisition 20, une unité d'autocalibration 12 qui comprend un module 13 de détermination de facteurs de calibration et un module 14 de calibration qui exploite les facteurs de calibration, et une unité de reconstruction 15.

Ce procédé comprend, pour chaque couple de capteurs parmi la pluralité de couples de capteurs comportant chacun un capteur émetteur *i* et un capteur récepteur *j* et pour chaque fréquence d'intérêt *fₖ* d'une pluralité de fréquences d'intérêt, l'obtention d'une mesure à la fréquence d'intérêt d'un champ de propagation d'une onde dans la structure du capteur émetteur vers le capteur récepteur *φ^{exp}*(|***x**ᵢ - **x**ⱼ*|, *fₖ*) et le calcul d'un coefficient de calibration c(|***x**ᵢ - **x**ⱼ*|*, fₖ*) permettant de relier le champ de propagation mesuré à la fréquence d'intérêt à un champ de propagation théorique à la fréquence d'intérêt *φ^{th}*(|***x**ᵢ - **x**ⱼ*|, *fₖ*) associé au couple de capteurs.

Dans le cas d'une calibration des données par rapport au modèle, le coefficient de calibration c(|***x**ᵢ - **x**ⱼ*|, *fₖ*) associé au couple {capteur émetteur *i* ; capteur récepteur *j*} et à la fréquence d'intérêt *fₖ* permet de réaliser la calibration selon l'équation (3) : ${φ}_{cal}^{exp} \left(c\left(\left|{x}_{i}-{x}_{j}\right|, {f}_{k}\right)\right) = c \left(\left|{x}_{i}-{x}_{j}\right|, {f}_{k}\right) {φ}^{exp} \left(c\left(\left|{x}_{i}-{x}_{j}\right|, {f}_{k}\right)\right) .$

Dans ce qui suit, le cas d'une calibration des données par rapport au modèle sera détaillé, étant entendu que l'invention n'est pas limitée à ce cas de figure et s'applique bien entendu également au cas d'une calibration du modèle aux données avec la détermination d'un coefficient de calibration d(|***x**ᵢ - **x**ⱼ*|, *fₖ*) associé au couple {capteur émetteur *i ;* capteur récepteur *j*} et à la fréquence d'intérêt *fₖ* pour réaliser la calibration suivante : ${φ}_{cal}^{th} \left(c\left(\left|{x}_{i}-{x}_{j}\right|, {f}_{k}\right)\right) = d \left(\left|{x}_{i}-{x}_{j}\right|, {f}_{k}\right) {φ}^{th} \left(\left|{x}_{i}-{x}_{j}\right|, {f}_{k}\right) .$

Les capteurs peuvent être des transducteurs piézoélectriques, des transducteurs acoustiques électromagnétiques ou des capteurs à réseau de Bragg sur fibre optique. Chaque capteur est relié à l'unité 20 d'acquisition et l'unité de prétraitement 11 fournit une mesure des champs de propagation expérimentaux *φ^{th}*(|***x**ᵢ - **x**ⱼ*|, *fₖ*) à l'unité d'autocalibration 12.

Les signaux délivrés par les capteurs sont des signaux électriques caractéristiques d'une réponse de la structure imagée. Pour chaque mesure indexée par *i, j* et *k,* un signal électrique d'émission est transmis au capteur émetteur *i* qui convertit l'excitation en une déformation mécanique. Le couplage entre le capteur émetteur *i* et la structure influence l'onde qui est émise. Cette influence est la même pour toutes les réceptions correspondant à cette émission *i*. Ensuite l'onde (somme de plusieurs modes élastiques guidés) se propage dans la structure en étant influencée par cette dernière jusqu'au capteur récepteur *j*. Ensuite, la déformation captée par le capteur récepteur *j* est convertie en signal électrique. Le couplage entre le capteur récepteur *j* et la structure est le même pour tous les signaux qui seront reçus par ce capteur récepteur, donc quel que soit le capteur émetteur *i*. Le signal électrique est ensuite transmis à l'unité 20 d'acquisition où il est numérisé et sauvegardé.

L'unité 11 de prétraitement est configurée pour fenêtrer temporellement les signaux numérisés afin de ne conserver que les trajets directs des modes propagatifs (en supprimant ainsi les réflexions sur les bords) et leur appliquer une transformée de Fourier afin d'extraire le coefficient de Fourier à la fréquence d'intérêt considérée et obtenir ainsi les mesures des champs de propagation expérimentaux *φ^{exp}*(|***x**ᵢ - **x**ⱼ*|, *fₖ*). Ces mesures sont délivrées à l'unité d'autocalibration 12 et plus précisément à son module 13 lequel est configuré pour calculer, pour chaque couple de capteurs, un coefficient de calibration permettant de relier le champ de propagation mesuré *φ^{exp}*(|***x**ᵢ - **x**ⱼ*|, *fₖ*) à un champ de propagation théorique *φ^{th}*(|***x**ᵢ - **x**ⱼ*|, *fₖ*).

Les différents coefficients de calibration ainsi calculés sont ensuite exploités par le module 14 de l'unité d'autocalibration 12 afin de réaliser la calibration à proprement parler. Ce module 14 est ainsi configuré pour réaliser, pour chaque couple de capteurs et pour chaque fréquence d'intérêt, la calibration à l'aide du coefficient de calibration calculé d'un champ de propagation parmi le champ de propagation mesuré (cas de la calibration des données au modèle) et le champ de propagation théorique (cas de la calibration du modèle aux données). Les champs de propagation calibrés $\left({φ}_{cal}^{exp}\left(\left|{x}_{i}-{x}_{j}\right|, {f}_{k}\right)\right.$ dans le cas d'une calibration des données au modèle) sont ensuite fournis à l'unité de reconstruction 15 laquelle est configurée pour fournir une image de la structure à partir des champs de propagation calibrés.

L'unité de reconstruction 15 peut être configurée pour mettre en œuvre un algorithme de type dérivée de forme ou échantillonnage linéaire. Dans une réalisation alternative, permettant notamment de prendre en compte des erreurs du modèle portant sur les propriétés des matériaux de la structure inspectée ou sur sa géométrie, l'unité de reconstruction 15 peut être configurée pour mettre en œuvre un algorithme de tomographie de type acoustique.

Dans le procédé selon l'invention, le calcul par le module 13, pour chaque couple de capteurs et pour chaque fréquence d'intérêt, d'un coefficient de calibration comprend, pour chaque fréquence d'intérêt et pour chaque ensemble d'une pluralité d'ensembles de couples de capteurs regroupant chacun les couples de capteurs dont les capteurs sont équidistants, le calcul d'un coefficient de calibration propre à l'ensemble.

Les couples de capteurs sont ainsi triés selon les caractéristiques théoriques de la propagation (distance séparant le capteur récepteur du capteur émetteur, présence d'objets impactant la propagation...) et répartis dans différents ensembles où chaque ensemble regroupe les couples de capteurs équidistants (i.e. qui présentent un milieu de propagation théoriquement identique entre capteur émetteur et capteur récepteur).

Notamment, la détermination, pour une fréquence d'intérêt et pour un ensemble de couples de capteurs, d'un coefficient de calibration propre à l'ensemble comprend, pour chaque couple de capteurs de l'ensemble, la détermination d'un facteur de calibration à partir du champ de propagation mesuré à la fréquence d'intérêt *φ^{exp}*(|***x**ᵢ - **x**ⱼ*|, *fₖ*) qui est associée audit couple et du champ de propagation théorique à la fréquence d'intérêt *φ^{th}*(|***x**ᵢ - **x**ⱼ*|, *fₖ*) qui est associé audit couple. Il est ainsi obtenu, pour la distance de propagation considérée, une série de facteurs de calibration pour chaque fréquence d'intérêt. Cette opération est répétée pour chacune des distances de propagation considérées (i.e. pour chacun des ensembles de couples de capteurs équidistants).

Dans le cadre de la tomographie acoustique, le champ de propagation théorique à la fréquence d'intérêt *φ^{th}*(***x**ᵢ - **x**ⱼ*|, *fₖ*) peut être estimé au moyen de la fonction de Green libre acoustique de la structure *G*₀(***x**ᵢ, **x**ⱼ, f_{c}*).

Dans le cadre de l'imagerie selon la méthode de dérivée de forme, le champ de propagation théorique à la fréquence d'intérêt *φ^{th}*(|***x**ᵢ - **x**ⱼ*|, *fₖ*) peut être estimé par résolution numérique de l'équation de propagation des ondes élastodynamiques au moyen de la méthode des éléments finis.

Enfin, dans le cadre de l'imagerie selon la méthode d'échantillonnage linéaire LSM, le champ de propagation théorique à la fréquence d'intérêt *φ^{th}*(|***x**ᵢ - **x**ⱼ*|, *fₖ*) peut être estimé via une solution semi-analytique comprenant décomposition modale et calcul numérique des modes au moyen de la méthode des éléments finis semi-analytiques.

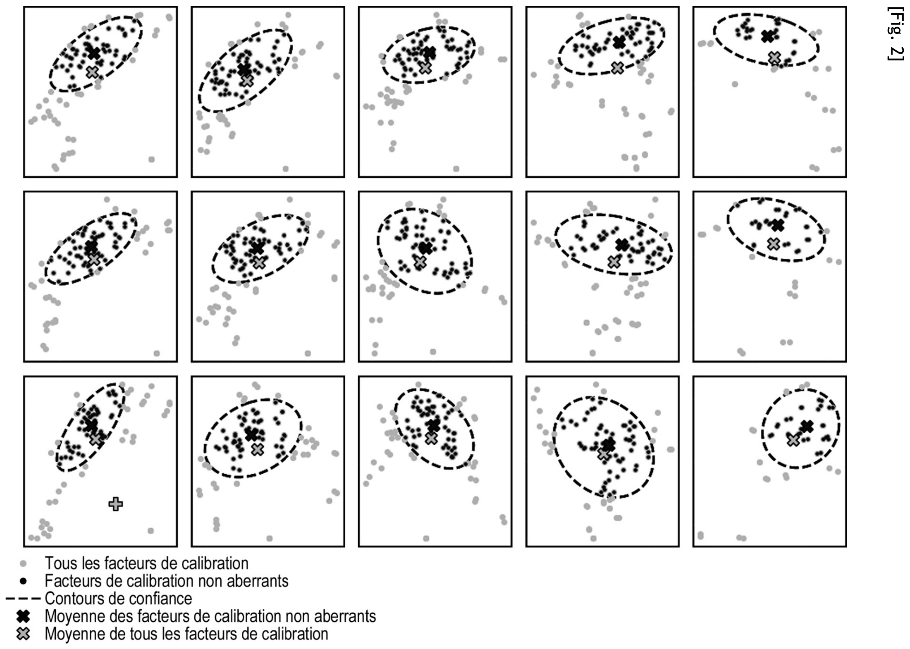

On a représenté sur la figure 2, les facteurs de calibration calculés pour cinq ensembles de couples de facteurs associés à cinq distances de propagation différentes (correspondant en l'espèce, de gauche à droite, à 20%, 40%, 60%, 80% et 100% d'une distance de propagation maximale), et ce pour trois fréquences d'intérêt différentes (correspondant en l'espèce, de haut en bas, à une fréquence correspondant à 1/3, 2/3 et 3/3 de la bande de fréquence d'intérêt).

Du fait de l'auto-calibration, les signaux mesurés peuvent contenir la signature d'un défaut que l'on veut reconstruire. Dès lors, si la calibration est réalisée à l'aide de l'ensemble des signaux, la signature du défaut risque d'être supprimée. Pour s'affranchir de la présence d'un potentiel défaut sur la structure il est nécessaire de localiser et supprimer les facteurs de calibration correspondant aux trajets traversant la zone du défaut.

Ainsi, le calcul, pour une fréquence d'intérêt et pour un ensemble de couples de capteurs, du coefficient de calibration propre à l'ensemble comprend de préférence l'identification, parmi les facteurs de calibration déterminés pour chaque couple de capteurs de l'ensemble, de facteurs de calibration aberrants et de facteurs de calibration non aberrants (également dits facteurs sains) et la détermination d'une valeur à partir des facteurs de calibration non aberrants. Cette valeur - qui constitue le coefficient de calibration propre à l'ensemble - est par exemple une moyenne des facteurs de calibration non aberrants.

Dans une première réalisation possible, pour une fréquence d'intérêt et pour un ensemble de couples de capteurs, le coefficient de calibration associé à chaque couple de capteurs de l'ensemble correspond au coefficient de calibration propre à l'ensemble. Autrement dit, le coefficient de calibration propre à l'ensemble (déterminé à partir des facteurs de calibration sains) est affecté à chacun des couples de capteurs de l'ensemble.

Dans une autre réalisation possible, pour une fréquence d'intérêt et pour un ensemble de couples de capteurs, le coefficient de calibration associé à un couple de capteurs est le facteur de calibration associé lorsque ce facteur de calibration est sain et correspond au coefficient de calibration propre à l'ensemble (déterminé à partir des facteurs de calibration sains) lorsque le facteur de calibration associé est aberrant.

Afin de détecter et d'écarter les facteurs de calibration impactés par un potentiel défaut, il est possible d'effectuer une sélection dans le plan complexe (avec en abscisse les valeurs réelles et en ordonnée les valeurs imaginaires) où les facteurs de calibration calculés pour chaque couple d'un ensemble à une fréquence d'intérêt donnée forment (cf. figure 2) un nuage de point associé à une loi multidimensionnelle de matrice de covariance ${M}_{f}^{d}$.

En effet, lorsque la structure inspectée ne comporte pas de défaut, l'ensemble des facteurs de calibration devraient être co-localisés. En pratique, dues aux incertitudes expérimentales et à l'approximation sur le modèle capteur, le nuage n'est pas co-localisé mais plutôt réparti autour de sa moyenne avec un écart-type plus ou moins grand dépendant de toutes les incertitudes présentes. L'apparition d'un défaut dans la structure affecte certains trajets de propagation et engendre donc l'apparition de valeurs aberrantes se détachant du nuage initialement plutôt bien localisé dans le plan complexe.

Pour ne choisir que les trajets qu'on considère "sains" il faut construire un contour de confiance dans le plan complexe. Celui-ci doit refléter les caractéristiques statistiques du nuage formé par les facteurs de calibration. Un tel contour de confiance est représenté sur la figure 2 pour chacun des 5*3 nuages de points considérés.

Dans une réalisation possible, l'identification, parmi les facteurs de calibration déterminés pour chaque couple de capteurs d'un ensemble, de facteurs de calibration aberrants et de facteurs de calibration non aberrants comprend, pour chaque facteur de calibration, le calcul d'une distance de Mahalanobis entre le facteur de calibration et une distribution formée par les facteurs de calibration déterminés pour chaque couple de capteurs de l'ensemble. Cette distribution est caractérisée par une moyenne ${μ}_{f}^{d}$ et une matrice de covariance ${M}_{f}^{d}$, les indices *d* et *f* représentant ici respectivement la distance de propagation attachée à un ensemble de couples de capteurs équidistants et la fréquence d'intérêt considérée. Notons que les facteurs de calibration sont ici vus comme des vecteurs de dimension 2, la première composante étant la partie réelle et la seconde la partie imaginaire. La distance de Mahalanobis s'exprime alors selon ${D}_{M} \left({c}_{f}^{d}\right) = \sqrt{\left({c}_{f}^{d}-{μ}_{f}^{d}\right) {\left({M}_{f}^{d}\right)}^{- 1} \left({c}_{f}^{d}-{μ}_{f}^{d}\right)}$ , où ${c}_{f}^{d}$ représente le facteur de calibration objet de l'évaluation.

Il existe plusieurs façons de calculer la matrice de covariance associée à un ensemble de points. Une approche dite « Empirique » utilise la formule $M = \frac{1}{n} {\sum }_{i = 1}^{n} \left({x}_{i}-μ\right) {\left({x}_{i}-μ\right)}^{T}$ , où *xᵢ* est un point du nuage et *µ* la moyenne. Cette formule prend en compte l'ensemble du nuage de point. Lorsque les données contiennent beaucoup de valeurs aberrantes, celles-ci sont susceptible de « tirer » la moyenne vers elles et d'augmenter la variance. Ceci a pour conséquence de fausser la matrice de covariance.

Une approche dite « Robuste » peut alors être préférée selon laquelle on cherche à obtenir le plus petit déterminant d'une sous matrice de covariance associée à un sous-ensemble du nuage de point initial. Cette minimisation assure donc que la matrice finale sera associée à un sous-ensemble de point qui ne comporte pas de valeurs aberrantes et reflète alors réellement les caractéristiques statistiques du nuage de point.

On notera que l'invention n'est pas limitée à l'utilisation de la distance de Mahalanobis et que d'autres distances, comme la distance euclidienne ou la distance de Manhattan, peuvent être utilisées.

La distance de Mahalanobis est toutefois privilégiée du fait de sa capacité à mesurer la distance entre un point et le centre d'une distribution normale multivariée. Celle-ci peut être convertie en probabilités à l'aide d'une distribution du *χ*² lorsque les données suivent une distribution normale multidimensionnelle. Il est alors possible de spécifier un niveau de signifiance *α* qui permet d'attribuer les valeurs aberrantes aux points extérieurs à l'ellipse de confiance associée à *α*.

Pour le choix du *α* on peut prendre, par exemple, une probabilité de 50%, c'est-à-dire qu'au moins 50% des valeurs auront une distance de Mahalanobis inférieure à ce seuil et seront donc conservées pour la calibration. L'objectif est de s'assurer que la signature du défaut est bien conservée après calibration et donc qu'elle est exclue du calcul du coefficient de calibration propre à l'ensemble. Il est ainsi préférable de prendre un intervalle suffisamment faible quitte à écarter des trajets sains. D'autres distributions peuvent être utilisées conjointement avec la distance utilisée, telles que la distribution log-normale. La loi normale est privilégiée pour sa simplicité, ses propriétés mathématiques bien définies, et son adéquation à de nombreuses données réelles grâce à l'usage du théorème central limite.

On présente dans ce qui suit des résultats comparatifs de calibrations réalisées selon la méthode antérieure et selon le procédé de l'invention.

Concernant tout d'abord la tomographie acoustique, les mêmes capteurs sont en général utilisés pour tous les points d'émission et de réception. De plus, les capteurs sont généralement couplés à la surface de la structure. Ainsi, la dépendance en espace du modèle à l'émission et à la réception tombe.

Dans le cas d'une erreur sur le modèle capteur (*δE*₀(*f_{c}*) à l'émission et *δR*₀(*f_{c}*) à la réception), l'équation (2) devient donc : ${c}_{ij} = \frac{{φ}^{th} \left({x}_{i}, {x}_{j}, {f}_{c}\right)}{{φ}^{exp} \left({x}_{i}, {x}_{j}, {f}_{c}\right)} = \frac{{E}_{0} \left({f}_{c}\right) {P}_{0} \left({x}_{i}, {x}_{j}, {f}_{c}\right) {R}_{0} \left({f}_{c}\right)}{\left({E}_{0}\left({f}_{c}\right)+{δE}_{0}\left({f}_{c}\right)\right) {P}_{0} \left({x}_{i}, {x}_{j}, {f}_{c}\right) \left({R}_{0}\left({f}_{c}\right)+{δR}_{0}\left({f}_{c}\right)\right)} .$

La dépendance selon l'indice des émetteurs et récepteurs tombe puisque le propagateur se simplifie et les coefficients de calibration s'expriment selon : ${c}_{ij} = \frac{{E}_{0} \left({f}_{c}\right) {R}_{0} \left({f}_{c}\right)}{\left({E}_{0}\left({f}_{c}\right)+{δE}_{0}\left({f}_{c}\right)\right) \left({R}_{0}\left({f}_{c}\right)+{δR}_{0}\left({f}_{c}\right)\right)} .$

La méthode antérieure est donc applicable et donne de bons résultats dans ce cas.

Une erreur qui se situerait dans le propagateur (erreur sur les propriétés matériaux ou sur la géométrie de la structure) impacte le nombre d'onde *k*₀ d'une erreur *δk*₀(*f_{c}*) et l'équation (2) devient alors : ${c}_{ij} = \frac{{φ}^{th} \left({x}_{i}, {x}_{j}, {f}_{c}\right)}{{φ}^{exp} \left({x}_{i}, {x}_{j}, {f}_{c}\right)} = \frac{{E}_{0} \left({x}_{i}, {f}_{c}\right) \frac{i}{4} {H}_{0}^{\left(1\right)} \left[{k}_{0}\left({f}_{c}\right)\left|{x}_{j}-{x}_{i}\right|\right] {R}_{0} \left({x}_{j}, {f}_{c}\right)}{{E}_{0} \left({x}_{i}, {f}_{c}\right) \frac{i}{4} {H}_{0}^{\left(1\right)} \left[\left({k}_{0}\left({f}_{c}\right)+{δk}_{0}\left({f}_{c}\right)\right)\left|{x}_{j}-{x}_{i}\right|\right] {R}_{0} \left({x}_{j}, {f}_{c}\right)}$

Soit ${c}_{ij} = \frac{{H}_{0}^{\left(1\right)} \left[{k}_{0}\left({f}_{c}\right)\left|{x}_{j}-{x}_{i}\right|\right]}{{H}_{0}^{\left(1\right)} \left[\left({k}_{0}\left({f}_{c}\right)+{δk}_{0}\left({f}_{c}\right)\right)\left|{x}_{j}-{x}_{i}\right|\right]}$. Ici, la dépendance selon l'indice des émetteurs et récepteurs ne se simplifie pas. En effet, les coefficients de calibration dépendent de la distance |***x**ⱼ* - ***x**ᵢ*| entre la position de l'émetteur *i* et celle du récepteur *j.* Ainsi, si l'erreur *δk*₀(*f_{c}*) devient trop grande, la méthode antérieure est mise en échec.

C'est dans cette configuration (erreur dans le propagateur) que le procédé selon l'invention s'avère intéressant puisqu'il traite les coefficients de calibration en réalisant au préalable un tri sur les distances entre capteurs. La configuration expérimentale décrite ci-dessous illustre cela.

La structure imagée est un tube en acier de diamètre externe 274,06 mm et d'épaisseur 4,5 mm. Deux couronnes de 32 transducteurs piézoélectriques chacune sont couplées à la structure. Ces deux couronnes sont espacées de 40 cm. Dans la zone imagée (entre les deux couronnes) deux défauts de corrosion ont été créés par électrolyse. Le premier plutôt large et peu profond et le second plus petit et plus profond. Les signaux sont acquis pour une émission d'une impulsion sonore de 5 cycles à 50 kHz.

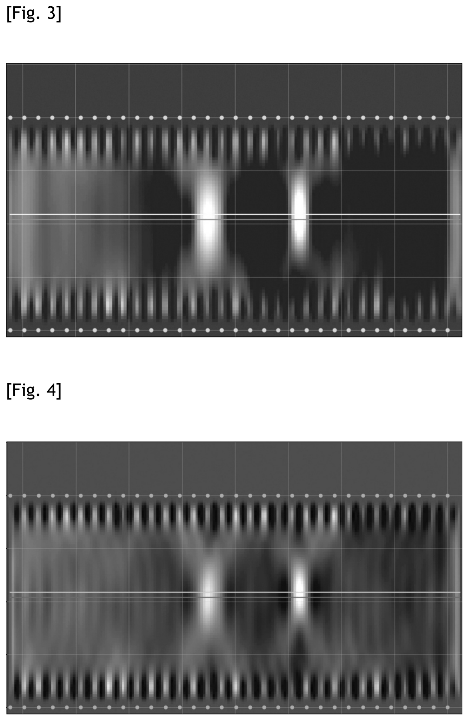

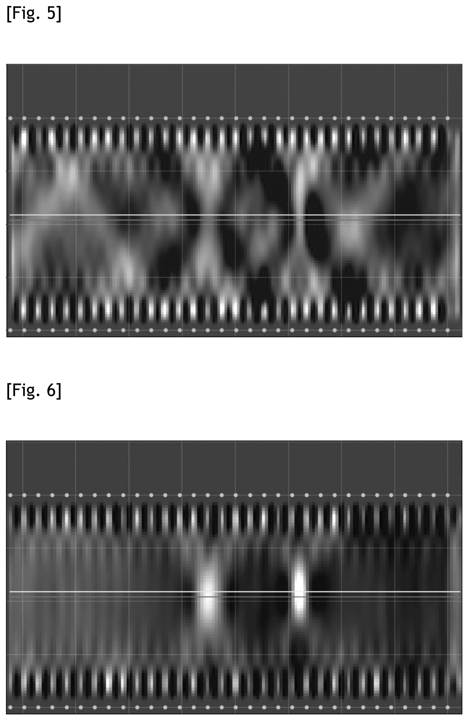

Illustrons, dans un premier temps, le cas où *δk*₀(*f_{c}*) « *k*₀(*f_{c}*). Pour ce faire, *k*₀ est calculé pour les valeurs théoriques des propriétés matériaux et de la géométrie de la structure. Les images de tomographie calculées à partir d'une autocalibration avec la méthode antérieure et avec le procédé selon l'invention sont tracées respectivement sur la figure 4 et sur la figure 5. On constate une qualité similaire : les deux défauts sont clairement identifiables.

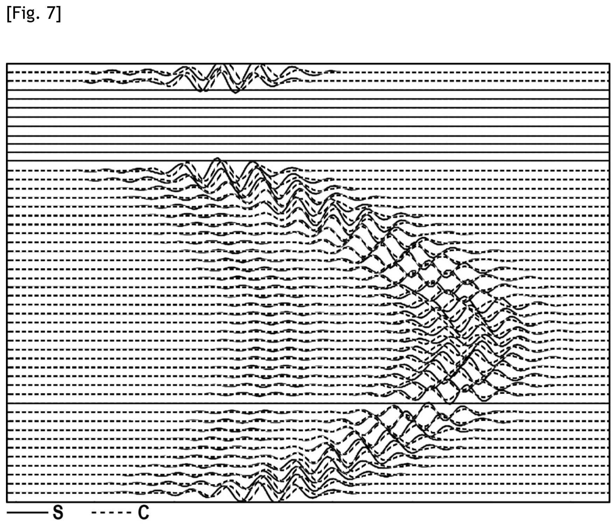

Illustrons maintenant un cas où *δk*₀(*f_{c}*) n'est plus négligeable. Nous choisissons pour ce cas de volontairement ajouter une erreur venant de la géométrie de la structure. En effet, pour calculer les courbes de dispersion dont découle la valeur de *k*₀, nous fixons la valeur de l'épaisseur à 3 mm au lieu de 4,5 mm ce qui a comme effet d'introduire une erreur sur l'estimation du nombre d'onde. On constate cette fois très clairement que la reconstruction des défauts dans le cas de l'autocalibration avec la méthode antérieure (figure 6) est très dégradée alors que l'autocalibration avec le procédé selon l'invention permet de garder une qualité d'imagerie pratiquement similaire (figure 7).

On considère maintenant l'imagerie élastodynamique et plus particulièrement la reconstruction de formes d'ondes élastiques destinée à la résolution du problème d'inversion de forme d'onde complète par la méthode de la dérivée de forme. Dans le but de simplifier la compréhension, un cas expérimental sur une géométrie plane est considéré. Des signaux sont générés numériquement par la méthode des éléments finis sur la géométrie saine, ces signaux servant à l'inversion dans le cas de l'algorithme d'imagerie. Pour comparer la méthode antérieure et le procédé selon l'invention, ces signaux sont calibrés avec les deux approches. Cela permet d'obtenir des signaux calibrés que l'on peut ensuite comparer. Pour rappel, la calibration doit compenser les différences entre le modèle et les données. Ici, le modèle capteur a été volontairement modifié pour simuler une erreur de modèle entre les signaux expérimentaux et les signaux servant pour l'inversion. En effet, dans le cas expérimental ce sont des transducteurs piézoélectriques qui sont utilisés (émission purement radiale selon ex et ey) contrairement aux signaux générés pour l'inversion qui eux sont issus d'un modèle d'émission ponctuel (émission purement normale selon ez). Si la calibration fonctionne correctement, les signaux servant pour l'inversion devraient compenser cette erreur de modèle. Un autre rôle de la calibration est de bien sûr écarter les valeurs aberrantes pour le calcul des coefficients de calibration. Pour pouvoir comparer les deux approches, un troisième champ est utilisé. Il s'agit de données expérimentales de référence, c'est-à-dire la géométrie sans le défaut. Ces données permettent de calculer des erreurs avec les signaux calibrés issus des deux approches. En effet, comme la calibration est censée ne pas considérer les signaux comportant la signature du défaut, une fois calibrés, les signaux utilisés pour l'inversion devraient correspondre aux données de référence. Ceci n'est bien évidemment valide que si l'estimation initiale de la structure est saine et donc correspond en tout point à la géométrie utilisée pour obtenir les signaux expérimentaux.

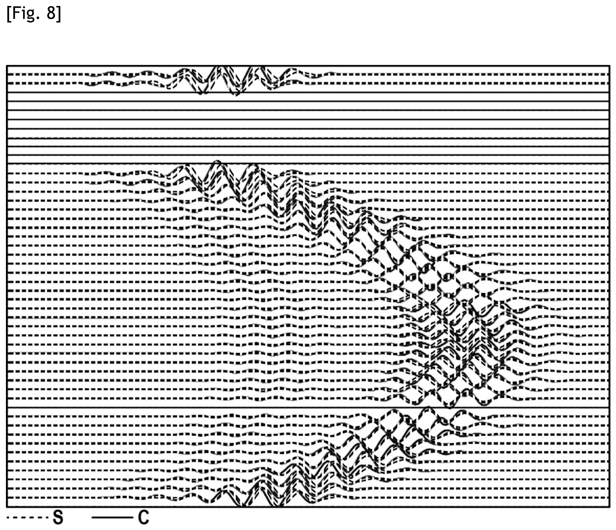

Des signaux de référence sains S et des signaux calibrés C sont représentés sur les figures 7 et 8 pour respectivement la méthode antérieure et le procédé selon l'invention. Le procédé selon l'invention permet d'obtenir un meilleur résultat qualitatif. C'est notamment le cas pour le mode S0 (premier paquet, plus faible) qui n'est pas compensé dans le cas de la méthode antérieure puisque celle-ci est mono-modale.

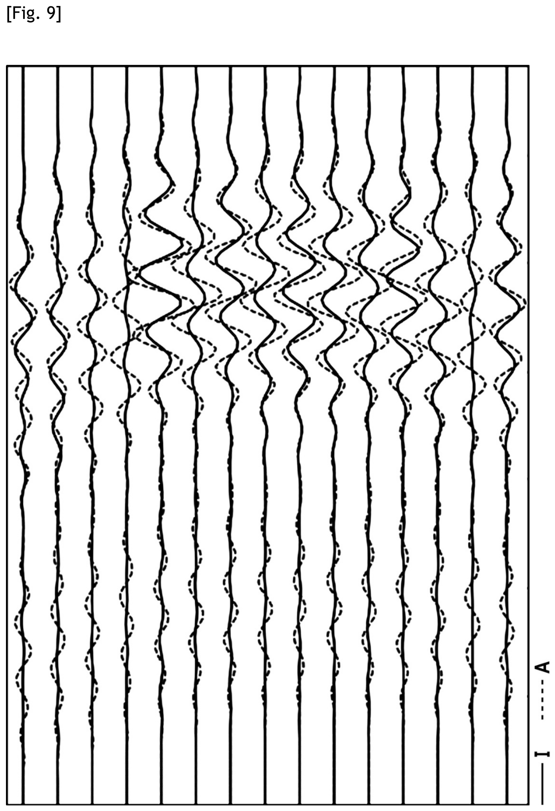

La figure 9 montre l'erreur relative A entre les signaux calibrés par la méthode antérieure et les signaux de référence sains ainsi que l'erreur relative I entre les signaux calibrés par le procédé selon l'invention et les signaux de référence sains. On constate que l'erreur faite après calibration avec la méthode antérieure est plus importante que celle faite après calibration avec le procédé selon l'invention, ce qui démontre montrant l'intérêt du procédé selon l'invention pour reconstruire des formes d'ondes complètes en présence de plusieurs modes et pour plusieurs fréquences. A noter qu'il a fallu faire un choix car jusqu'à maintenant la méthode antérieure était appliquée sur des champs à la fréquence centrale. Dans le cas de l'inversion par dérivée de forme, les champs comportent plusieurs fréquences. Le choix a donc été de ne calculer qu'un unique facteur correspondant à la fréquence centrale puis de l'appliquer à toutes les fréquences et toutes les distances identiquement.

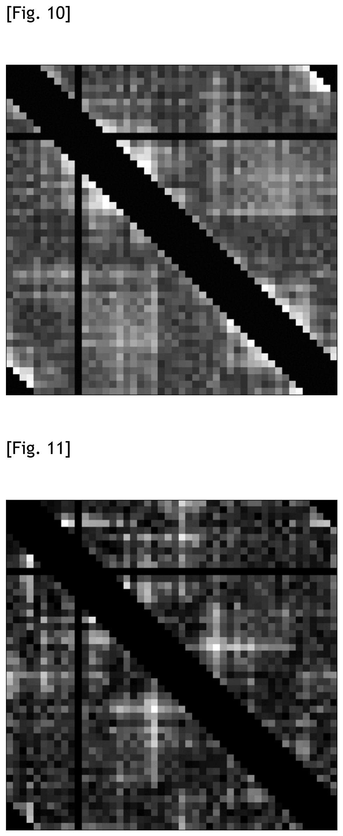

Les figures 10 et 11 montrent les matrices d'erreur L2 intégré en temps pour l'ensemble des couples émetteurs/récepteurs pour respectivement la méthode antérieure et le procédé selon l'invention. Plus le pixel est clair et plus l'erreur avec la référence est grande. On remarque que la méthode antérieure possède une erreur L2 plus importante que le procédé selon l'invention.

L'invention n'est pas limitée au procédé précédemment décrit mais s'étend également à un dispositif d'imagerie comprenant un processeur configuré pour mettre en œuvre ce procédé ainsi qu'à un produit programme d'ordinateur comprenant des instructions qui, lorsque le programme est exécuté par un ordinateur, conduisent celui-ci à mettre en œuvre ce procédé.

## Revendications

1. Procédé de calibration pour l'imagerie d'une structure par ondes élastiques guidées, comprenant :
- pour chaque couple de capteurs d'une pluralité de couples de capteurs comportant chacun un capteur émetteur et un capteur récepteur et pour chaque fréquence d'intérêt d'une pluralité de fréquences d'intérêt :
∘ l'obtention d'une mesure à la fréquence d'intérêt (*φ^{exp}*(|***x**ᵢ* - ***x**ⱼ*|, *fₖ*)) d'un champ de propagation d'une onde dans la structure du capteur émetteur vers le capteur récepteur,
∘ la détermination d'un coefficient de calibration (c(|***x**ᵢ - **x**ⱼ*|, *fₖ*)) permettant de relier le champ de propagation mesuré à la fréquence d'intérêt à un champ de propagation théorique à la fréquence d'intérêt (*φ^{th}*(|***x**ᵢ - **x**ⱼ*|, *fₖ*)) associé au couple de capteurs,
**caractérisé en ce que** ladite détermination, pour chaque couple de capteurs et pour chaque fréquence d'intérêt, d'un coefficient de calibration comprend, pour chaque fréquence d'intérêt et pour chaque ensemble d'une pluralité d'ensembles de couples de capteurs regroupant chacun les couples de capteurs dont les capteurs sont équidistants, le calcul d'un coefficient de calibration propre à l'ensemble.

2. Procédé selon la revendication 1, dans lequel la détermination, pour une fréquence d'intérêt et pour un ensemble de couples de capteurs, d'un coefficient de calibration propre à l'ensemble comprend, pour chaque couple de capteurs de l'ensemble, la détermination d'un facteur de calibration à partir du champ de propagation mesuré à la fréquence d'intérêt (*φ^{exp}*(|***x**ᵢ* - ***x**ⱼ*|, *fₖ*)) qui est associée audit couple et du champ de propagation théorique à la fréquence d'intérêt (*φ^{th}*(|***x**ᵢ* - ***x**ⱼ*|, *fₖ*)) qui est associé audit couple.

3. Procédé selon la revendication 2, dans lequel le calcul, pour une fréquence d'intérêt et pour un ensemble de couples de capteurs, du coefficient de calibration propre à l'ensemble comprend l'identification, parmi les facteurs de calibration déterminés pour chaque couple de capteurs de l'ensemble, de facteurs de calibration aberrants et de facteurs de calibration non aberrants et la détermination d'une valeur à partir des facteurs de calibration non aberrants.

4. Procédé selon la revendication 3, dans lequel, pour une fréquence d'intérêt et pour un ensemble de couples de capteurs, le coefficient de calibration associé à chaque couple de capteurs de l'ensemble correspond au coefficient de calibration propre à l'ensemble.

5. Procédé selon la revendication 3, dans lequel, pour une fréquence d'intérêt et pour un ensemble de couples de capteurs, le coefficient de calibration associé à un couple de capteurs est le facteur de calibration associé lorsque ce facteur de calibration est non aberrant et correspond au coefficient de calibration propre à l'ensemble lorsque le facteur de calibration associé est aberrant.

6. Procédé selon l'une des revendications 3 à 5, dans lequel l'identification, parmi les facteurs de calibration déterminés pour chaque couple de capteurs de l'ensemble, de facteurs de calibration aberrants et de facteurs de calibration non aberrants comprend, pour chaque facteur de calibration, le calcul d'une distance de Mahalanobis entre le facteur de calibration et une distribution formée par les facteurs de calibration déterminés pour chaque couple de capteurs de l'ensemble.

7. Procédé selon l'une des revendications 3 à 6, dans lequel la valeur déterminée à partir des facteurs de calibration non aberrants est une moyenne des facteurs de calibration non aberrants.

8. Procédé selon l'une des revendications 1 à 7, comprenant en outre pour chaque couple de capteurs et pour chaque fréquence d'intérêt, la calibration à l'aide du coefficient de calibration calculé d'un champ de propagation parmi le champ de propagation mesuré à la fréquence d'intérêt associé audit couple et le champ de propagation théorique à la fréquence d'intérêt associé audit couple.

9. Dispositif d'imagerie (10) comprenant un processeur configuré pour mettre en œuvre le procédé selon l'une des revendications 1 à 8.

10. Produit programme d'ordinateur comprenant des instructions qui, lorsque le programme est exécuté par un ordinateur, conduisent celui-ci à mettre en œuvre le procédé selon l'une des revendications 1 à 8.
